# EUROPEAN PATENT APPLICATION

(11) **EP 1 621 425 A1**
(43) Date of publication of application: **01.02.2006**
(21) Application number: 05106879.9
(22) Date of filing: 26.07.2005
(51) Int. Cl.: B60R 25/10, B60R 25/04

(54) **Telematic security system for a vehicle**

(30) Priority: 30.07.2004 IT TO20040101 U
(71) Applicant: MAGNETI MARELLI SISTEMI ELETTRONICI S.p.A., 20011 Corbetta (Milano) (IT); ELEM S.p.A., 10078 Venaria TO (IT)
(72) Inventor: Orlandi, Stefano, 10147 Torino (IT); Barra, Gian Paolo, 10070 Cafasse (Torino) (IT)
(74) Representative: Deambrogi, Edgardo

(57) **Abstract**

A telematic security system for a vehicle comprises a telematic device (10) which can be disposed on board the vehicle, comprising a unit (30) for receiving and transmitting digital radio communications according to a specified communication protocol, and a reader (32) of an identification code stored in an external identification device; and an immobilization device (100), comprising an electronic control unit (110) which can be disposed on board the vehicle, and which is associated with means (111) for receiving an identification signal transmitted by an external authentication unit (120). The control unit (110) can prevent the starting or driving of the vehicle, as a result of a failure to receive the identification signal. The receiving and transmission unit (30) is connected to the control unit (110) to transmit an alarm signal to the outside. The control unit (110) can prevent the starting or driving of the vehicle, as a result of the detection of a specified anomaly of the telematic device (10).

## Description

The present invention relates in a general way to security systems for vehicles.

The increasing demand for electronic accessories to enhance the comfort of passengers and drivers of motor vehicles has led to the development and introduction of advanced connectivity systems for radio links between individual on-board devices and between the vehicle and the external environment.

The security sector has also made use of recent developments in electronics, which have led to the installation of integrated car radios and telephones on board vehicles, as well as communication systems for positioning and navigation.

Consequently there has been a development of telematic anti-theft devices for vehicles, capable of impeding the starting or driving of a stolen vehicle and of automatically transmitting an emergency call via an on-board telephone of the vehicle. One of these devices is known, for example, from European patent EP-787634.

In this sector, a well-known problem is that of increasing the impenetrability level of the security system.

The object of the present invention is to provide a telematic security system for vehicles which is highly tamper-proof and in which the probability of unauthorized use of a vehicle is reduced.

This object is achieved, according to the invention, with a telematic security system having the characteristics defined in Claim 1.

In such a system, the telematic device for use by a user is installed in an accessible housing in the vehicle, while the immobilization device, which is separate from the telematic device and is intended to immobilize the vehicle, can be installed remotely from the telematic device and in a housing which is concealed or at least difficult to access.

Furthermore, theft is made more difficult by the fact that, in order for the vehicle to be started and/or driven, the reading means must recognize the identification code contained in the identification device, and the authentication unit must remain sufficiently close to the control unit of the immobilization device. Additionally, any tampering with the telematic device causes the immobilization of the vehicle, due to the action of the control unit of the immobilization device.

Preferred embodiments of the invention are claimed in the dependent claims.

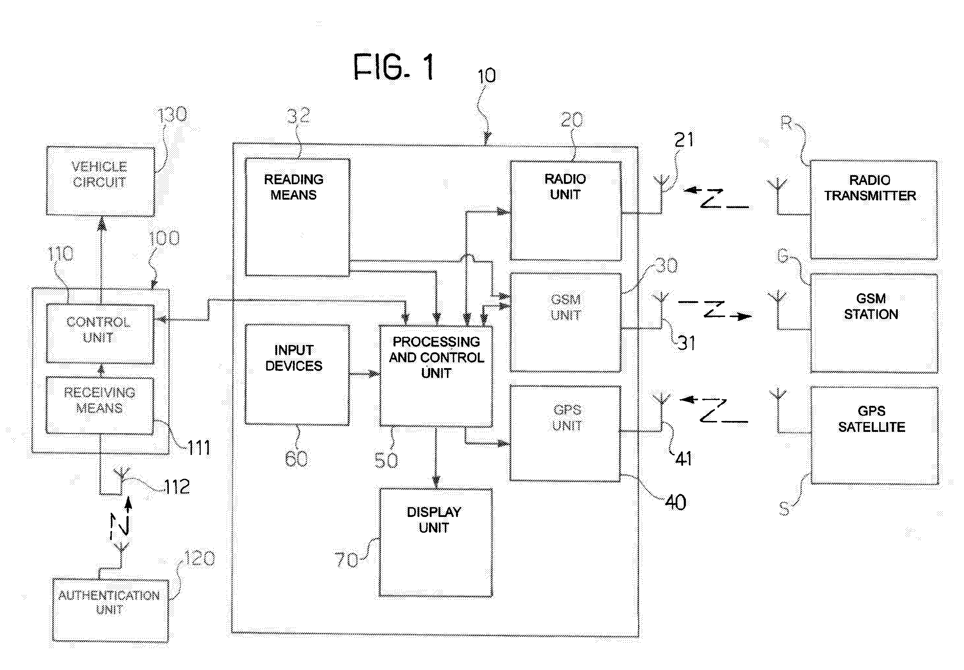

A preferred, but non-restrictive, embodiment of the invention will now be described with reference to the attached Figure 1, which shows a block diagram of a security system for a vehicle according to the present invention.

The telematic security system according to the invention comprises, in the first place, a telematic device 10 for managing radio communication functions, intended for installation in a vehicle. This telematic device 10 incorporates one or more electronic circuits dedicated to the reception and transmission of radio channels using various technologies. An example of a device of this type is the Connect device produced by Magneti Marelli.

For example, the telematic device comprises a radio unit 20 with a receiving part and an amplifier of conventional type (not shown). The amplifier output can be connected to one or more loudspeakers (not shown). The receiving part of the radio unit 20 is connected to a radio antenna 21 by a corresponding cable. The radio unit 20 is designed to receive signals from a radio transmitter indicated by R.

According to the invention, the telematic device 10 is designed to incorporate at least one digital radio communication technology.

In particular, the device 10 comprises a digital radio reception and transmission unit 30 for receiving and transmitting digital radio communications according to a GSM/GPRS/UMTS protocol, this unit being simply referred to as a GSM unit in the following text. This GSM unit 30, connected to a transmission/reception antenna 31, is designed for wireless operation with an external GSM station, indicated by G. A telephone device (not shown) is connected to the GSM unit 30.

The GSM/GPRS/UMTS link thus enables a car telephone to be made available to the system for emergency calls.

The GSM unit 30 is also connected to means 32 for reading an identification code. These reading means 32 can take the form of a card reader, for example. The GSM unit 30 is activated subject to the recognition of the identification code. This code is stored in an identification device, for example a memory card, such as a SIM card, a chip card, or the like.

The device 10 also comprises a unit 40 for receiving digital radio communications according to a GPS protocol, this unit being simply referred to as a GPS unit in the following text. This GPS unit 40, connected to a receiving antenna 41, is designed to receive signals from a GPS satellite, indicated by S.

The GPS link is used as a navigation aid and for positioning the vehicle in case of theft.

These individual units of the telematic device are controlled in a known way by a processing and control unit 50. The processing and control unit 50 comprises a positioning and navigation system of a known type (not shown) which uses the information made available via the GPS link. Input devices 60 are designed to enable the user to use the different functions provided by the telematic device 10, associated with radio reception, communication by means of the telephone device, the vehicle navigation and positioning system, and so on. A display unit 70, also connected to the control unit 50, enables the system information to be displayed and aids the user in his use of the input devices 60. This display unit takes the form of a TFT or dot matrix display, for example.

The telematic security system according to the invention also comprises an immobilization device 100. This device 100 is of the type which can prevent the starting or driving of the vehicle, as a result of a failure to receive a radiofrequency identification signal from an external unit. An example of a device of this type is the BLU Block Radio security device produced by ELEM S.p.A.

The device 100 comprises an electronic control unit 110 which can be disposed on board the vehicle, preferably in a different housing from that of the telematic device 10. The control unit 110 is associated with means 111 for receiving the aforesaid identification signal. For this purpose, the receiving means 111 are connected to an antenna 112, designed to receive signals from an external authentication unit 120.

This external authentication unit 120 is of very small size, so that it can be carried conveniently by the user, in a pocket or in a handbag for example, and the communication between this authentication unit 120 and the control unit 110 is such that there is a constant radio transmission between them while the distance between them remains below a specified maximum value. The authentication unit 120 can consist of a transponder, for example.

The control unit 110 is connected to an electrical circuit of the vehicle 130, for example a circuit of the starter motor, of the ignition system and/or of the fuel supply system.

If the identification signal ceases to be received by the control unit 110, for example because the distance between the authentication unit 120 and the control unit 110 exceeds the specified maximum value or because the authentication unit 120 has been tampered with, the control unit 110 can prevent the starting or driving of the vehicle by breaking the circuit 130.

The reception and transmission unit 130 of the telematic device 10 is connected by means of the processing and control unit 50 to the control unit 110 of the immobilization device 100. If the aforesaid condition of failure to receive the identification signal occurs, the telematic device 10 is designed to transmit an alarm signal to the outside, for example to a security control centre, by means of the GSM unit 30.

This signal can advantageously be configured with an SMS system.

The control unit 110 is also designed to prevent the starting or driving of the vehicle if the processing and control unit 50 of the telematic device 10 detects a specified anomaly condition of one of its units, or if the control unit 110 of the immobilization device detects an anomaly of the telematic device 10 itself.

An anomaly condition which can cause the immobilization of the vehicle can be any kind of anomaly due to tampering, such as the cutting of one or more power supply and/or communication cables or the disconnection of the GSM antenna, or attempted theft, for example the absence of the SIM card or the use of an unauthorized SIM card.

The effectiveness of the security system according to the invention is based on the fact that, whereas the telematic device 10 has to be installed in an accessible housing of the vehicle, for example in a dashboard near the driver's seat, in order to perform the functions for which it is made, the immobilization device 100 can be installed remotely from the telematic device 10 and in a housing which is concealed or at least difficult to access.

Furthermore, theft is made more difficult by the fact that, in order for the vehicle to be started and/or driven, the correct SIM card must be present in the reader 32 of the GSM unit 30, and the authentication unit 120 must remain sufficiently close to the control unit 110 of the immobilization device 100. Additionally, any tampering with the telematic device 10 causes the immobilization of the vehicle, due to the action of the control unit 110 of the immobilization device.

Clearly, provided that the principle of the invention is retained, the details of construction and the forms of embodiment can be varied widely from what has been described and illustrated, without departure from the scope of the invention.

## Claims

1. Telematic security system for a vehicle, **characterized in that** it comprises
a telematic device (10), which can be disposed on board a vehicle, comprising a unit (30) for receiving and transmitting digital radio communications according to a specified communication protocol and means (32) for reading an identification code stored in an external identification device, this telematic device (10) being activatable subject to the recognition of the said identification code; and
an immobilization device (100), comprising an electronic control unit (110) which can be disposed on board the vehicle, and which is associated with means (111) for receiving an identification signal transmitted by an external authentication unit (120), the said control unit (110) being capable of preventing the starting or driving of the vehicle, as a result of a failure to receive the said identification signal;
and in which the said receiving and transmitting unit (30) of the telematic device (10) is connected for operation to the said control unit (110) of the immobilization device (100) to transmit towards the outside, as a result of the said condition of failure to receive, an alarm signal encoded according to the said communication protocol; the said control unit (110) of the immobilization device (100) being additionally capable of preventing the starting or driving of the vehicle as a result of the detection of a specified anomaly of the said telematic device (10).

2. System according to Claim 1, in which the said receiving and transmitting unit (30) of the telematic device (10) is a unit for receiving and transmitting digital radio communications according to a GSM/GPRS/UMTS protocol.

3. System according to Claim 2, additionally comprising a unit (40) for receiving digital radio communications according to a GPS protocol.

4. System according to any one of Claims 2 to 3, in which the said reading means (32) are made in the form of a memory card reader.

5. System according to any one of Claims 2 to 4, in which the said alarm signal is encoded in SMS format.
